# EUROPÄISCHE PATENTSCHRIFT

(11) **EP 2 360 406 B1**
(45) Veröffentlichungstag und Bekanntmachung des Hinweises auf die Patenterteilung: **02.01.2019**
(21) Anmeldenummer: 10450013.7
(22) Anmeldetag: 08.02.2010
(51) Int. Cl.: F16L 21/03

(54) **Rohr mit einer Steckmuffe mit Stützring**
Tube with a connection socket having a support ring
Tuyau doté d'un raccord par mandrinage équipé d'une bague d'appui

(43) Veröffentlichungstag der Anmeldung: 24.08.2011
(73) Patentinhaber: Pipelife Austria GmbH & Co. KG, 2355 Wr. Neudorf (AT)
(72) Erfinder: Nigmatullin, Vadim, 8052 Graz (AT); Valenta, Paul, 2333 Leopoldsdorf (AT)
(74) Vertreter: Keschmann, Marc

(56) Entgegenhaltungen:
- WO-A1-2008/067896
- GB-A- 1 175 503

## Beschreibung

Die Erfindung betrifft ein Rohr mit einer Steckmuffe, die eine Sicke mit einem in die Sicke eingelegten Stützring aufweist, wobei in der Sicke neben dem Stützring eine Ringnut ausgebildet ist, in welche lösbar ein elastomerer Dichtungsring einbringbar ist.

Die Erfindung bezieht sich dabei insbesondere auf gemuffte drucklose und druckbeaufschlagte Rohre aus einem polymeren Werkstoff, vorzugsweise PP, PE oder PVC.

Eine derartige Steckmuffe mit Stützring ist beispielsweise aus der WO 2008/067896 A1 und der GB 1 175 503 A bekannt geworden. Wie dieser Patentanmeldung zu entnehmen ist, besteht bei Rohren der eingangs genannten Art das Problem, dass die Herstellungstoleranzen der Sickenbreite im Bereich von einigen Millimetern liegen, wodurch die Gefahr besteht, dass der Dichtungsring nicht zuverlässig in der Sicke sitzt und die Übergangsradien zu groß ausfallen, sodass nur mehr eine geringe Sickenflankenfläche verbleibt, auf der sich der Dichtring nicht voll abstützen kann, sodass er beim Einschieben des Rohrs oder bei Längsbewegung des Rohrs relativ zu der Rohrendsteckmuffe beschädigt oder aus der sicke ausgeschoben werden kann, wodurch eine undichte Verbindung entsteht. Der Dichtring sitzt zudem in einer zu breiten Sicke relativ locker, wodurch er beim Transport des Rohres herausprellen und verloren gehen kann. Zur Lösung dieses Problems wird in der WO 2008/067896 A1 ein Sickeneinsatz vorgeschlagen, der an zumindest einem Teil seiner radial außenliegenden Umfangsfläche mit einem konischen Querschnitt versehen ist, wobei die Sicke an zumindest einem dem Sickeneinsatz zugewandten Bereich der radial innen liegenden Wandung bezogen auf die Mittelachse des Rohrendes konisch ausgebildet ist. Durch die konische Ausgestaltung sowohl des Sickeneinsatzes als auch der innen liegenden wandung der Sicke wird sichergestellt, dass der Sickeneinsatz sicher gehalten wird. Der Sickeneinsatz kann insbesondere nicht in axialer Richtung verschoben werden oder wandern, sodass sichergestellt ist, dass angrenzend an den Sickeneinsatz eine Ringnut ausgebildet bzw. beibehalten wird, in welche der Dichtungsring lösbar eingelegt werden kann.

Ein derartiger Sickeneinsatz oder Stützring weist in der Regel einen Außendurchmesser auf, der dem Innendurchmesser der Sicke entspricht. Aufgrund der Abmessungen des Stützrings gestaltet es sich oftmals schwierig, den Stützring nach Ausbildung der Sicke in diese einzubringen. Der Stützring dient dazu, den Ausschubwiderstand des Dichtungsrings aus der Sicke zu erhöhen, was umso besser gelingt, je fester der Stützring in der Sicke festsitzt und je steifer und verformungsresistenter der Stützring ausgebildet ist. Je steifer und verformungsresistenter der Stützring ist, desto schwerer lässt er sich jedoch in die Sicke einbringen.

Die Erfindung zielt daher darauf ab, einen Stützring der eingangs genannten Art dahingehend weiterzubilden, dass die Ausschubfestigkeit verbessert wird, ohne die Einlegbarkeit des Stützrings in die Sicke zu beeinträchtigen.

Zur Lösung dieser Aufgabe ist der Stützring der eingangs genannten Art erfindungsgemäß dadurch gekennzeichnet, dass der Stützring eine äußere ringförmige Wand und eine innere ringförmige Wand aufweist, zwischen welchen ein nach wenigstens einer Seite des Stützrings hin offener Ringraum ausgebildet ist. Dadurch, dass der Stützring im Wesentlichen eine doppelwandige Konstruktion mit einem nach einer Seite hin offenen Ringraum aufweist, wird bei entsprechender Dimensionierung eine ausreichend steife Grundstruktur zur Verfügung gestellt und gleichzeitig die Möglichkeit des radialen Einfederns der äußeren ringförmigen Wand relativ zur inneren ringförmigen Wand geschaffen, sodass eine entsprechende Flexibilität für das Einbringen des Stützrings in die Sicke erreicht wird. Gleichzeitig wird aufgrund der Freistellung der äußeren ringförmigen Wand die Möglichkeit geschaffen, den Stützring mit einer Vorspannung in die Sicke einzulegen, sodass die Ausschubfestigkeit erhöht werden kann.

Dabei ist bevorzugt vorgesehen, dass der die Freistellung bewirkende Ringraum lediglich an der der Ringnut abgewandten Seite des Stützrings offen ist. Die Freistellung ist somit an derjenigen Seite des Stützrings vorgesehen, welche sich bevorzugt gegen die Flanke der Sicke abstützt, sodass aufgrund der Möglichkeit des Einwärtsfederns der äußeren ringförmigen Wand eine Art Verklemmung des Stützrings in der Sicke bewirkt wird. Um in diesem Zusammenhang eine Doppelpassung zwischen Stützringaußenfläche und Sickeninnenfläche zu vermeiden, ist die Ausbildung bevorzugt derart getroffen, dass der Stützring eine Abschrägung aufweist, die an der von der Ringnut abgewandten Seite an die zylindrische Außenmantelfläche anschließt und mit der Außenmantelfläche bevorzugt einen Winkel (α) von 10-20° einschließt. Außerdem kann in diesem Zusammenhang mit Vorteil vorgesehen sein, dass die Stirnfläche des Stützrings eine Abschrägung aufweist, die an die Abschrägung der Außenmantelfläche anschließt und die mit einer Normalen auf die Ringachse bevorzugt einen Winkel (β) von 20-50° einschließt. Wenn, wie dies einer weiteren bevorzugten Ausbildung entspricht, der Winkel (β) zwischen der Abschrägung der Stirnfläche und der Normalen auf die Rohrachse kleiner gewählt ist als der Neigungswinkel (γ) der Sickenflanke, bedeutet dies, dass der Stützring lediglich entlang einer kreisförmigen Berührungslinie mit der Sickenflanke in Kontakt steht, sodass die Verspannung des Stützrings innerhalb der Sicke begünstigt wird. Mit andere Worten bedeutet dies, dass die dem Stützring benachbarte Sickenflanke den gleichen oder einen größeren Winkel mit der Normalen auf die Rohrachse einschließt als die Abschrägung an der Stirnfläche des Stützrings.

Um die Stabilität des Stützrings zu erhöhen, kann die umlaufende Freistellung durch Stege unterbrochen sein, wobei die Ausbildung in diesem Zusammenhang bevorzugt derart getroffen ist, dass in Umfangsrichtung verteilt sich durch den Ringraum erstreckende Stege vorgesehen sind, welche die äußere ringförmige Wand mit der inneren ringförmigen Wand verbinden. Für ein optimales Verhältnis aus Einlegbarkeit und Ausschubfestigkeit sind die Stege in einer Umfangsteilung von 20-30 mm, bevorzugt 22-26 mm angeordnet.

Optimierungen können auch hinsichtlich des Verhältnisses der Wanddicken der äußeren und der inneren ringförmigen Wand und der durch den Ringraum bedingten Freistellung zueinander vorgenommen werden. In diesem Zusammenhang ist bevorzugt vorgesehen, dass die Dicke der äußeren ringförmigen Wand 25-40% der Stützringhöhe beträgt. Die Dicke der inneren ringförmigen Wand beträgt bevorzugt 15-35% der Stützringhöhe. Die Höhe des Ringraums beträgt bevorzugt 25-60% der Stützringhöhe. Die Höhe des Ringraums wird dabei in radialer Richtung gemessen.

Mit Vorteil ist vorgesehen, dass die als Differenz zwischen Außen- und Innendurchmesser des Stützrings definierte Stützringhöhe im Wesentlichen der Sickentiefe entspricht. Es kann aber auch der Fall sein, dass die Stützringhöhe nur 80% der Sickentiefe oder mehr entspricht. Der Stützring muss somit nicht die gesamte Sickentiefe ausfüllen, muss jedoch eine ausreichende Ausschubsicherung für den angrenzenden Dichtungsring darstellen.

Als Material für den Stützring kommt bevorzugt ein polymeres Material, vorzugsweise Polypropylen, Polyethylen oder PVC, zum Einsatz. Das Material des Stützrings weist zur Erzielung einer ausreichenden Ausschubfestigkeit bei gleichzeitiger Begünstigung der Einlegbarkeit einen Elastizitätsmodul von 500-1200 MPa, vorzugsweise 600-900 MPa, auf.

Um eine optimale Sicherung des Dichtungsrings zu gewährleisten, ist die Ausbildung bevorzugt derart getroffen, dass die Ringnut auf einer Seite von dem Stützring begrenzt ist. Auf der anderen Seite ist die Ringnut bevorzugt von einer Sickenflanke begrenzt. Der Dichtungsring liegt somit zwischen dem Stützring und einer der beiden Sickenflanken.

Die Erfindung wird nachfolgend anhand eines in der Zeichnung schematisch dargestellten Ausführungsbeispiels näher erläutert. In dieser zeigen Fig.1 ein Muffenende eines Rohrs mit einer Sicke, in der ein Stützring sowie ein Dichtungsring angeordnet sind, Fig.2 einen Querschnitt des erfindungsgemäßen Stützrings und Fig.3 und Fig.4 Detailansichten des Stützringquerschnitts gemäß den Pfeilen III bzw. IV.

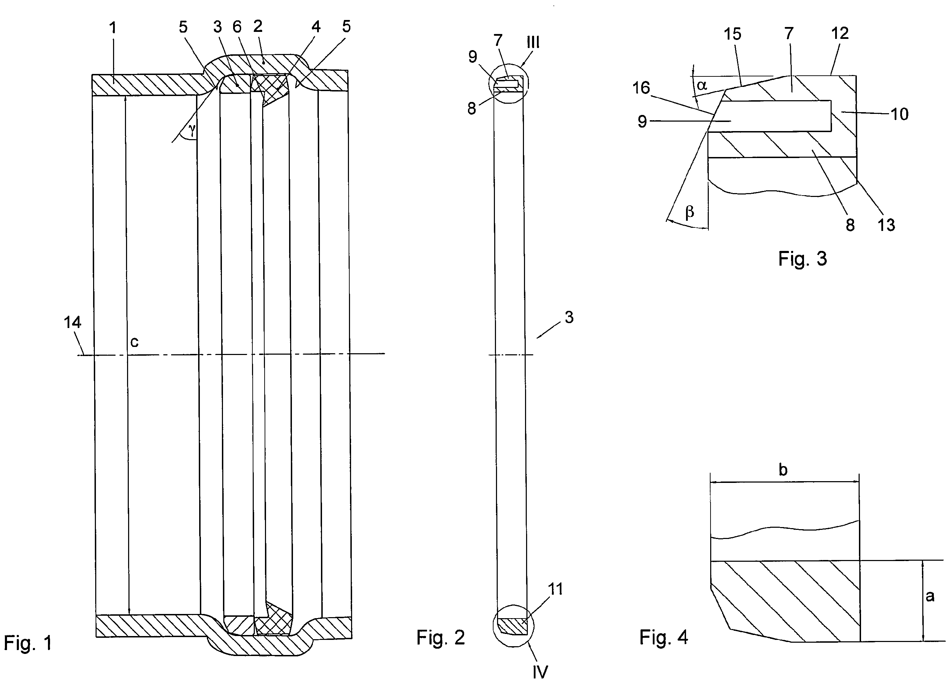

In Fig.1 ist ein Muffenende 1 eines Rohrs dargestellt, das eine Sicke 2 aufweist, welche einen Freiraum bildet. In dem durch die Sicke 2 gebildeten Freiraum sind ein Stützring 3 sowie ein Dichtungsring 4 angeordnet. Die Sicke 2 weist eine im Wesentlichen zylindrische Innenmantelfläche auf, welche von zwei Sickenflanken 5 begrenzt ist. Die Tiefe der Sicke entspricht der Differenz zwischen dem Innendurchmesser der Sicke und dem Innendurchmesser des Muffenendes 1, der mit c angedeutet ist. Es versteht sich, dass das in Fig.1 nicht dargestellte restliche Rohr einen geringeren Innendurchmesser aufweist als das Muffenende 1, um in die Rohreinsteckmuffe ein Rohrende eines weiteren Rohrs einschieben zu können, so wie dies aus dem Stand der Technik bekannt ist.

Die in Fig.4 mit a bezeichnete Stützringhöhe entspricht im Wesentlichen der Sickentiefe. Der Dichtungsring 4 hingegen weist bei der Darstellung gemäß Fig.1 eine vorspringende Dichtlippe 6 auf, die aus dem von der Sicke 2 gebildeten Freiraum hervorragt und beim Einschieben eines Rohrs entsprechend komprimiert wird.

Wie dies insbesondere aus Fig.2 sowie aus der Detailansicht gemäß Fig.3 hervorgeht, weist der Stützring 3 eine äußere ringförmige Wand 7 sowie eine innere ringförmige Wand 8 auf, zwischen welchen ein nach einer Seite hin offener Ringraum 9 ausgebildet ist. Zwischen der äußeren ringförmigen Wand 7 und der inneren ringförmigen Wand 8 verbleibt ein Randbereich 10, welcher die äußere ringförmige Wand 7 und die innere ringförmige Wand 8 miteinander verbindet. Außerdem ist entlang des Umfangs des Stützrings 3 eine Mehrzahl von Stegen 11 vorgesehen, welche ebenfalls die äußere ringförmige Wand 7 mit der inneren ringförmigen Wand 8 verbinden. Die Stege 11 sind dabei derart ausgeführt, dass im Bereich der Stege der Ringquerschnitt voll ausgebildet ist, wie dies in Fig.2 dargestellt ist. Die Stegdicke beträgt bevorzugt zwischen 2 und 4 mm, besonders bevorzugt 3 mm. Der Mittenabstand benachbarter Stege beträgt in Umfangsrichtung bezogen auf die Wandmitte zwischen 20 und 30 mm, bevorzugt zwischen 22 und 26 mm.

In Fig.3 ist weiters ersichtlich, dass sowohl die äußere Mantelfläche 12 als auch die innere Mantelfläche 13 des Stützrings 3 zylindrisch ausgebildet sind, d.h. parallel zur Rohrachse 14. Am Außenumfang weist der Stützring 3 weiters eine Abschrägung 15 auf, die an die zylindrische Außenmantelfläche 12 anschließt und mit der Außenmantelfläche einen Winkel α von bevorzugt 10-20° einschließt. Weiters ist ersichtlich, dass die Stirnfläche des Stützrings 3 eine Abschrägung 16 aufweist, die an die Abschrägung 15 der Außenmantelfläche anschließt und mit einer Normalen auf die Ring- bzw. Rohrachse 14 bevorzugt einen Winkel β von 20-50° einschließt.

Der in den Figuren gezeigte Stützring 3 ist als geschlossener Ring ausgebildet.

## Patentansprüche

1. Rohr mit einer Steckmuffe, die eine Sicke (2) mit einem in die Sicke (2) eingelegten Stützring (3) aufweist, wobei in der Sicke (2) neben dem Stützring (3) eine Ringnut ausgebildet ist, in welche lösbar ein elastomerer Dichtungsring (4) einbringbar ist, wobei die Außenumfangsfläche (12) des Stützrings (3) und die mit der Außenumfangsfläche (12) zusammenwirkende Innenfläche der Sicke (2) in Bezug auf die Rohrachse (14) zylindrisch ausgebildet sind und der Außendurchmesser des Stützrings (3) und der Innendurchmesser der Sicke (2) derart aufeinander abgestimmt sind, dass der Stützring (3) mit einer radialen Vorspannung in der Sicke (2) gehalten ist, **dadurch gekennzeichnet, dass** der Stützring (3) eine äußere ringförmige Wand (7) und eine innere ringförmige Wand (8) aufweist, zwischen welchen ein nach wenigstens einer Seite des Stützrings (3) hin offener Ringraum (9) ausgebildet ist.

2. Rohr nach Anspruch 1, **dadurch gekennzeichnet, dass** die als Differenz zwischen Außen- und Innendurchmesser des Stützrings (3) definierte Stützringhöhe (a) im Wesentlichen der Sickentiefe entspricht.

3. Rohr nach Anspruch 1 oder 2, **dadurch gekennzeichnet, dass** der Ringraum (9) lediglich an der der Ringnut abgewandten Seite des Stützrings (3) offen ist.

4. Rohr nach Anspruch 1, 2 oder 3, **dadurch gekennzeichnet, dass** in Umfangsrichtung verteilt sich durch den Ringraum (9) erstreckende Stege (11) vorgesehen sind, welche die äußere ringförmige Wand (7) mit der inneren ringförmigen Wand (8) verbinden.

5. Rohr nach Anspruch 4, **dadurch gekennzeichnet, dass** die Stege (11) in einer Umfangsteilung von 20-30 mm, bevorzugt 22-26 mm angeordnet sind.

6. Rohr nach einem der Ansprüche 1 bis 5, **dadurch gekennzeichnet, dass** die Dicke der äußeren ringförmigen Wand (7) 25-40% der Stützringhöhe (a) beträgt.

7. Rohr nach einem der Ansprüche 1 bis 6, **dadurch gekennzeichnet, dass** die Dicke der inneren ringförmigen Wand (8) 15-35% der Stützringhöhe (a) beträgt.

8. Rohr nach einem der Ansprüche 1 bis 7, **dadurch gekennzeichnet, dass** die Höhe des Ringraums (9) 25-60% der Stützringhöhe (a) beträgt.

9. Rohr nach einem der Ansprüche 1 bis 8, **dadurch gekennzeichnet, dass** der Stützring (3) aus einem polymeren Material, vorzugsweise Polypropylen, Polyethylen oder PVC besteht.

10. Rohr nach einem der Ansprüche 1 bis 9, **dadurch gekennzeichnet, dass** das Material des Stützrings (3) einen Elastizitätsmodul von 500-1200 MPa, vorzugsweise 600-900 MPa, aufweist.

11. Rohr nach einem der Ansprüche 1 bis 10, **dadurch gekennzeichnet, dass** das Rohr aus einem polymeren Werkstoff, vorzugsweise PP, PE oder PVC besteht.

12. Rohr nach einem der Ansprüche 1 bis 11, **dadurch gekennzeichnet, dass** der Stützring eine Abschrägung (15) aufweist, die an der von der Ringnut abgewandten Seite an die zylindrische Außenmantelfläche (12) anschließt und mit der Außenmantelfläche (12) bevorzugt einen Winkel (α) von 10-20° einschließt.

13. Rohr nach Anspruch 12, **dadurch gekennzeichnet, dass** die Stirnfläche des Stützrings (3) eine Abschrägung (16) aufweist, die an die Abschrägung (15) der Außenmantelfläche (12) anschließt und die mit einer Normalen auf die Ringachse (14) bevorzugt einen Winkel (β) von 20-50° einschließt.

14. Rohr nach Anspruch 13, **dadurch gekennzeichnet, dass** die dem Stützring (3) benachbarte Sickenflanke (5) den gleichen oder einen größeren Winkel (γ) mit der Normalen auf die Rohrachse (14) einschließt als die Abschrägung (16) an der Stirnfläche des Stützrings (3).

15. Rohr nach einem der Ansprüche 1 bis 14, **dadurch gekennzeichnet, dass** die Ringnut auf einer Seite von dem Stützring (3) begrenzt ist.

16. Rohr nach einem der Ansprüche 1 bis 15, **dadurch gekennzeichnet, dass** die Ringnut auf der einen Seite von dem Stützring (3) und auf der anderen Seite von einer Sickenflanke (5) begrenzt ist.

## Claims

1. A tube with a plug-in sleeve comprising a beading (2) with a support ring inserted in the beading (2), wherein in the beading (2), next to the support ring (3), an annular groove is formed, into which an elastomeric sealing ring (4) is introducible, wherein the outer peripheral surface (12) of the support ring (3) and the inner surface of the beading (2), which cooperates with the outer peripheral surface (12), are designed to be cylindrical relative to the tube axis (14), and the outer diameter of the support ring (3) and the inner diameter of the beading (2) are mutually adapted such that the support ring (3) is held in the beading (2) under radial prestress, **characterized in that** the support ring (3) comprises an outer annular wall (7) and an inner annular wall (8), between which an annular space (9) open towards at least one side of the support ring (3) is formed.

2. A tube according to claim 1, **characterized in that** the support ring height (a), which is defined as the difference between the outer and inner diameters of the support ring (3), substantially corresponds to the beading depth.

3. A tube according to claim 1 or 2, **characterized in that** the annular space (9) is only open on the side of the support ring (3) facing away from the annular groove.

4. A tube according to claim 1, 2 or 3, **characterized in that** webs (11) extending through the annular space (9) are provided, distributed in the circumferential direction, which webs connect the outer annular wall (7) to the inner annular wall (8).

5. A tube according to claim 4, **characterized in that** the webs (11) are disposed at a circumferential pitch of 20-30 mm, preferably 22-26 mm.

6. A tube according to any one of claims 1 to 5, **characterized in that** the thickness of the outer annular wall (7) is 25-40% of the support ring height (a).

7. A tube according to any one of claims 1 to 6, **characterized in that** the thickness of the inner annular wall (8) is 15-35% of the support ring height (a).

8. A tube according to any one of claims 1 to 7, **characterized in that** the height of the annular space (9) is 25-60% of the support ring height (a).

9. A tube according to any one of claims 1 to 8, **characterized in that** the support ring (3) is made of a polymeric material, preferably polypropylene, polyethylene or PVC.

10. A tube according to any one of claims 1 to 9, **characterized in that** the material of the support ring (3) has an elasticity module of 500-1200 MPa, preferably 600-900 MPa.

11. A tube according to any one of claims 1 to 10, **characterized in that** the tube is made of a polymeric material, preferably PP, PE or PVC.

12. A tube according to any one of claims 1 to 11, **characterized in that** the support ring comprises a bevel (15) adjoining the cylindrical outer surface area (12) on the side facing away from the annular groove and preferably enclosing an angle (α) of 10-20° with the outer surface area (12).

13. A tube according to claim 12, **characterized in that** the end face of the support ring (3) comprises a bevel (16) adjoining the bevel (15) of the outer surface area (12) and preferably enclosing an angle (β) of 20-50° with a normal relative to the ring axis (14).

14. A tube according to claim 13, **characterized in that** the beading flank (5) adjacent the support ring (3) with the normal relative to the tube axis (14) encloses an angle (γ) equal to, or larger than, the bevel (16) on the end face of the support ring (3).

15. A tube according to any one of claims 1 to 14, **characterized in that** the annular groove is limited by the support ring (3) on one side.

16. A tube according to any one of claims 1 to 15, **characterized in that** the annular groove is limited by the support ring (3) on one side and by a beading flank (5) on the other side.

## Revendications

1. Tuyau doté d'un manchon emboîtable, qui présente une moulure (2) avec une bague d'appui (3) insérée dans la moulure (2), dans lequel une rainure annulaire est réalisée dans la moulure (2) à côté de la bague d'appui (3), rainure annulaire dans laquelle une bague d'étanchéité élastomère (4) peut être introduite de manière amovible, dans lequel la surface périphérique extérieure (12) de la bague d'appui (3) et la surface intérieure de la moulure (2) coopérant avec la surface périphérique extérieure (12) sont réalisées de manière cylindrique par rapport à l'axe de tuyau (14) et le diamètre extérieur de la bague d'appui (3) et le diamètre intérieur de la moulure (2) sont accordés l'un à l'autre de sorte que la bague d'appui (3) est retenue avec une précontrainte radiale dans la moulure (2), **caractérisé en ce que** la bague d'appui (3) présente une paroi annulaire extérieure (7) et une paroi annulaire intérieure (8), entre lesquelles un espace annulaire (9) ouvert vers au moins un côté de la bague d'appui (3) est réalisé.

2. Tuyau selon la revendication 1, **caractérisé en ce que** la hauteur de bague d'appui (a) définie en tant que différence entre le diamètre extérieur et le diamètre intérieur de la bague d'appui (3) correspond sensiblement à la profondeur de moulure.

3. Tuyau selon la revendication 1 ou 2, **caractérisé en ce que** l'espace annulaire (9) est seulement ouvert au niveau du côté de la bague d'appui (3) opposé à la rainure annulaire.

4. Tuyau selon la revendication 1, 2 ou 3, **caractérisé en ce que** des entretoises (11) s'étendant à travers l'espace annulaire (9) et réparties dans la direction périphérique sont prévues, lesquelles relient la paroi annulaire extérieure (7) à la paroi annulaire intérieure (8).

5. Tuyau selon la revendication 4, **caractérisé en ce que** les entretoises (11) sont agencées dans une division périphérique de 20-30 mm, de préférence 22-26 mm.

6. Tuyau selon l'une quelconque des revendications 1 à 5, **caractérisé en ce que** l'épaisseur de la paroi annulaire extérieure (7) est 25-40 % de la hauteur de bague d'appui (a).

7. Tuyau selon l'une quelconque des revendications 1 à 6, **caractérisé en ce que** l'épaisseur de la paroi annulaire intérieure (8) est 15-35 % de la hauteur de bague d'appui (a).

8. Tuyau selon l'une quelconque des revendications 1 à 7, **caractérisé en ce que** la hauteur de l'espace annulaire (9) est 25-60 % de la hauteur de bague d'appui (a).

9. Tuyau selon l'une quelconque des revendications 1 à 8, **caractérisé en ce que** la bague d'appui (3) se compose d'un matériau polymère, de préférence polypropylène, polyéthylène ou PVC.

10. Tuyau selon l'une quelconque des revendications 1 à 9, **caractérisé en ce que** le matériau de la bague d'appui (3) présente un module d'élasticité de 500-1 200 MPa, de préférence de 600-900 MPa.

11. Tuyau selon l'une quelconque des revendications 1 à 10, **caractérisé en ce que** le tube se compose d'un matériau polymère, de préférence PP, PE ou PVC.

12. Tuyau selon l'une quelconque des revendications 1 à 11, **caractérisé en ce que** la bague d'appui présente un chanfrein (15), qui se raccorde au niveau du côté opposé à la rainure annulaire à la surface d'enveloppe extérieure cylindrique (12) et forme avec la surface d'enveloppe extérieure (12) de préférence un angle (α) de 10-20°.

13. Tuyau selon la revendication 12, **caractérisé en ce que** la surface frontale de la bague d'appui (3) présente un chanfrein (16), qui se raccorde au chanfrein (15) de la surface d'enveloppe extérieure (12) et qui forme avec une normale à l'axe de bague (14) de préférence un angle (β) de 20-50°.

14. Tuyau selon la revendication 13, **caractérisé en ce que** le flanc de moulure (5) adjacent à la bague d'appui (3) forme le même angle ou un angle supérieur (γ) avec la normale à l'axe de tuyau (14) en tant que chanfrein (16) au niveau de la surface frontale de la bague d'appui (3).

15. Tuyau selon l'une quelconque des revendications 1 à 14, **caractérisé en ce que** la rainure annulaire est délimitée d'un côté par la bague d'appui (3).

16. Tuyau selon l'une quelconque des revendications 1 à 15, **caractérisé en ce que** la rainure annulaire est délimitée de l'un côté par la bague d'appui (3) et de l'autre côté par un flanc de moulure (5).
